# EUROPÄISCHE PATENTSCHRIFT

(11) **EP 2 905 592 B1**
(45) Veröffentlichungstag und Bekanntmachung des Hinweises auf die Patenterteilung: **02.08.2017**
(21) Anmeldenummer: 15152809.8
(22) Anmeldetag: 28.01.2015
(51) Int. Cl.: G01L 5/00, B29C 67/00, G01B 9/02

(54) **Verfahren und Vorrichtung zur Bestimmung von Eigenspannungen eines Bauteils**
Method and device for determining strain in a component
Procédé et dispositif de détermination de contraintes résiduelles d'un composant

(30) Priorität: 05.02.2014 DE 102014202020
(43) Veröffentlichungstag der Anmeldung: 12.08.2015
(73) Patentinhaber: MTU Aero Engines AG, 80995 München (DE)
(72) Erfinder: Bamberg, Joachim, 85221 Dachau (DE); Hessert, Roland, 82211 Herrsching (DE)

(56) Entgegenhaltungen:
- DE-A1- 3 017 600
- US-A- 5 432 595
- US-B1- 7 286 893

## Beschreibung

Die Erfindung betrifft ein Verfahren zur Bestimmung von Eigenspannungen eines Bauteils während dessen Herstellung mittels eines generativen Fertigungsverfahrens, insbesondere eines Bauteils eines Flugtriebwerks. Die Erfindung betrifft weiterhin eine Vorrichtung zur Bestimmung von Eigenspannungen eines Bauteils während dessen Herstellung mittels eines generativen Fertigungsverfahrens.

Bei der generativen Fertigung von Bauteilen, zum Beispiel durch selektives Laserstrahlschmelzen, entstehen üblicherweise bauteilspezifisch hohe Eigenspannungen. Diese können bereits während des Aufbaus des Bauteils zur Rissbildung führen oder können bei einer nachgeschalteten Wärmebehandlung Bauteilverzüge bewirken. Zur Eigenspannungsanalyse werden in der Regel Röntgenverfahren und/oder die so genannte Bohrlochmethode eingesetzt. Mit diesen Verfahren können aber nur Bauteilrandschichten lokal teilzerstörend untersucht werden. Zudem darf die Oberfläche des Bauteils nicht zu stark gekrümmt sein. Ein Verfahren zur Eigenspannungsmessung eines Bauteils während dessen Herstellung mittels eines generativen Fertigungsverfahrens ist in der US 6 553 275 B1 beschrieben. Dabei wird ein pulverförmige Werkstoff, der mittels eines Lasers verschmolzen wird, auf ein Substrat aufgebracht, welches an seiner Rückseite Dehnungsmessstreifen aufweist. Auftretende Eigenspannungen während der Herstellung des Bauteils werden über die durch die Dehnmessstreifen indirekt gemessenen Dehnungen ermittelt. Weitere Verfahren und Vorrichtungen zur Bestimmungen der Eigenspannungen in einem Bauteil werden in US 5 432 595 A, DE 30 17 600 A1 und US 7 286 893 B1 beschrieben. Als nachteilig an den bekannten Verfahren ist der Umstand anzusehen, dass diese überwiegend zumindest lokal teilzerstörend arbeiten oder vergleichsweise aufwändig und ungenau sind.

Aufgabe der vorliegenden Erfindung ist es, ein Verfahren zur Bestimmung von Eigenspannungen eines Bauteils während dessen Herstellung mittels eines generativen Fertigungsverfahrens zu schaffen, welches zerstörungsfrei am Bauteil anwendbar ist, vergleichsweise einfach durchzuführen ist und exakte Eigenspannungsbestimmungen am herzustellenden Bauteil erlaubt. Eine weitere Aufgabe der Erfindung ist es, eine geeignete Vorrichtung zur Durchführung dieses Verfahrens zu schaffen.

Die Aufgaben werden erfindungsgemäß durch ein Verfahren gemäß Anspruch 1 sowie durch eine Vorrichtung gemäß Anspruch 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Ein erfindungsgemäßes Verfahren zur Bestimmung von Eigenspannungen eines Bauteils während dessen Herstellung mittels eines generativen Fertigungsverfahrens, insbesondere eines Bauteils eines Flugtriebwerks, umfasst folgende Schritte: Erzeugen von mindestens einem lokalen Schmelzbad in einer Bauteiloberfläche des herzustellenden Bauteils nach Fertigstellung eines vorbestimmten Bauteilabschnitts, optische Erfassung von zumindest in einem Bereich um das erzeugte Schmelzbad auftretenden Oberflächenverzerrungen und/oder -dehnungen und Ermittlung der zumindest im Bereich um das erzeugte Schmelzbad vorliegenden Eigenspannungen des Bauteils auf Grundlage der optisch erfassten Oberflächenverzerrungen und/oder - dehnungen. Durch das erfindungsgemäße Verfahren ist eine Online-Analyse der Eigenspannungen bei der generativen Fertigung von Bauteilen zur Prozesskontrolle, zur Verfahrensoptimierung und zur Kontrolle der Bauteilqualität möglich. Das erfindungsgemäße Verfahren arbeitet zerstörungsfrei, da nach Abschluss der Messung das Schmelzbad wieder erstarrt und der Aufbau des Bauteils nahezu unbeeinflusst fortgesetzt werden kann. Es ergibt sich kein Materialverbrauch an dem Bauteil, wie dies zum Beispiel bei der Eigenspannungsmessung mittels der Bohrlochmethode der Fall ist. Des Weiteren ist das erfindungsgemäße Verfahren vergleichweise einfach durchzuführen, da keine zusätzlichen Elemente, wie zum Beispiel die Dehnungsmessstreifen am oder im Bauteil angebracht werden müssen. Da mittels des erfindungsgemäßen Verfahrens beliebige Bauteilabschnitte beziehungsweise beliebige Strukturen des herzustellenden Bauteils dreidimensional, zerstörungsfrei, berührungslos und schnell untersucht werden können, ergibt sich eine genauere Darstellung der Eigenspannung während der Herstellung des Bauteils. Es können eine Vielzahl von Eigenspannungsdaten über das gesamte Bauteil durch das erfindungsgemäße Verfahren zuverlässig ermittelt werden. Dadurch ergibt sich des Weiteren der Vorteil, dass auch gegebenenfalls eine bewusste Einstellung günstiger Eigenspannungen im Bauteil möglich wird. Schließlich können Eigenspannungssimulationsrechnungen durch das erfindungsgemäße Verfahren validiert werden. Unter Oberflächenverzerrungen und/oder -dehnungen werden die im Bereich des erzeugten Schmelzbades auftretenden Formänderungen im Oberflächenbereich verstanden. Insbesondere sollen auch Oberflächenverzerrungen als eine Art von Oberflächendehnungen angesehen werden.

In einem beispielhaften Verfahren ist das generative Fertigungsverfahren ein generatives Schichtbauverfahren, wobei die Erzeugung von mindestens einem lokalen Schmelzbad in der Bauteiloberfläche nach Fertigstellung einer vorbestimmten Anzahl an generativ aufgebauten Bauteilschichten erfolgt. Je nach Art und Geometrie des herzustellenden Bauteils kann einerseits die Position der lokalen Schmelzbäder wie auch deren Erzeugung nach einer vorbestimmten Anzahl an Bauteilschichten durchgeführt werden. Zudem ergibt sich vorteilhafterweise die Möglichkeit, Eigenspannungen während der Herstellung des Bauteils schichtweise darzustellen und gegebenenfalls nach Fertigstellung des Bauteils dreidimensional grafisch darzustellen. Dies kann wiederum zur Validierung von Eigenspannungssimulationsberechnungen für die entsprechenden Bauteile oder auch zur Einstellung günstiger Eigenspannungen im Bauteil verwendet werden.

In dem erfindungsgemäßen Verfahren wird für die optische Erfassung der Oberflächenverzerrungen und/oder -dehnungen ein Speckle-Interferometrieverfahren verwendet. Derartige optische Verzerrungsverfahren werden in bekannter Weise bei der Eigenspannungsmessung mit der Bohrlochmethode verwendet. Bei der bekannten Bohrlochmethode ist aber die optische Erfassung der Dehnungen durch die Bohreinheit erschwert. Dieser Nachteil ist bei dem erfindungsgemäßen Verfahren nicht vorhanden, da der Schmelzlaser außerhalb des optischen Erfassungsbereichs positioniert werden kann. Insbesondere kann der Schmelzlaserstrahl schräg zur Oberfläche ausgerichtet sein. Die durch das lokale Schmelzbad in diesem Bereich des Bauteils entfernten Eigenspannungen führen zu einer entsprechenden Änderung beziehungsweise Umverteilung der verbleibenden Eigenspannungen in diesem Bereich, sodass es im Bereich um das lokale Schmelzbad zu Oberflächenverzerrungen und/oder -dehnungen kommt. Die Ausgestaltung der Oberflächenverzerrungen und/oder -dehnungen erlaubt die Berechnung der im Bauteilabschnitt oder der Bauteilschicht vor der Erzeugung des lokalen Schmelzbads vorhandenen Eigenspannungen. Zur Durchführung der optischen Verzerrungsmessung, insbesondere des Speckle-Interferometrieverfahrens wird zumindest der Bereich um das erzeugte Schmelzbad mit kohärentem Laserlicht bestrahlt. Das durch das Laserlicht erzeugte Interferenzmuster, zum Beispiel ein so genanntes Speckle-Muster, wird mittels einer optischen Detektionseinrichtung erfasst. Oberflächenverzerrungen und/oder -dehnungen ändern diese Muster. Aus der Änderung dieser Muster können die auftretenden Eigenspannungen berechnet werden.

Weitere Vorteile ergeben sich, da das Bauteil durch selektives Laserschmelzen und/oder durch selektives Lasersintern hergestellt wird. Die Verwendung eines generativen Schichtbauverfahrens ermöglicht in Verbindung mit einer schichtweisen Ermittlung von Eigenspannungen des Bauteils während seiner schichtweisen Herstellung eine besonders präzise Beurteilung der Fertigungsqualität des Bauteils. Darüber hinaus erlaubt die Verwendung des generativen Schichtbauverfahrens eine schnelle und ökonomische Fertigung geometrisch komplexer Bauteile in großen Stückzahlen, was insbesondere bei der Herstellung von Triebwerksbauteilen erhebliche Zeit- und Kostenvorteile ermöglicht. Beim selektiven Laserschmelzen werden dünne Pulverschichten des oder der verwendeten Werkstoffe auf eine Fertigungszone aufgebracht, mit Hilfe eines oder mehrerer Laserstrahlen lokal aufgeschmolzen und verfestigt. Anschließend wird die Fertigungszone abgesenkt, eine weitere Pulverschicht aufgebracht und erneut lokal verfestigt. Dieser Zyklus wird solange wiederholt, bis das fertige Bauteil erhalten wird. Das fertige Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt.

In dem erfindungsgemäßen Verfahrens wird das lokale Schmelzbad mittels Laserenergie erzeugt. Dadurch ist es möglich, kleine und exakt positionierte Schmelzbäder in allen Bereichen der Bauteiloberfläche während der generativen Herstellung des Bauteils zu erzeugen. Die Tiefe des Schmelzbads kann dabei durch die Variation der Laserleistung und/oder der Einwirkdauer des Laserstrahls eingestellt werden. Es ist jedoch auch möglich, das lokale Schmelzbad mittels anderer Energiequellen zu erzeugen. Wird allerdings Laserenergie verwendet, so kann zur Erzeugung des lokalen Schmelzbads eine für das selektive Laserschmelzen und/oder das selektive Lasersintern verwendete Laserlichtquelle verwendet werden. Dies verringert den apparativen Aufbau der Vorrichtung insgesamt. Zudem besteht vorteilhafterweise die Möglichkeit, dass für eine Belichtung wenigstens des Bereichs um das erzeugte Schmelzbad zur Durchführung des Speckle-Interferometrieverfahrens, zur Erzeugung des lokalen Schmelzbads und für das selektive Laserschmelzen und/oder das selektive Lasersintern eine gemeinsame Laserlichtquelle verwendet wird. Neben dem relativ unaufwändigen Apparateaufbau besteht zudem vorteilhafterweise die Möglichkeit bereits vorhandene generative Fertigungseinrichtungen auf Laserbasis auch für die Durchführung des Speckle-Interferometrieverfahrens und damit zur optischen Erfassung der auftretenden Oberflächenverzerrungen und/oder -dehnungen zu erfassen.

In weiteren vorteilhaften Ausgestaltungen des erfindungsgemäßen Verfahrens weist das lokal erzeugte Schmelzbad eine vordefinierte Geometrie auf. Insbesondere sind ring- oder kreisförmige Geometrien von Vorteil, da hierbei eine besonders exakte Darstellung beziehungsweise Berechnung der Eigenspannungen des Bauteils auf Grundlage der optisch erfassten Oberflächenverzerrungen und/oder -dehnungen möglich ist. Üblicherweise weist das lokal erzeugte Schmelzbad einen durchschnittlichen Durchmesser von 0,5 bis 3,0 mm und eine Tiefe von 0,1 bis 1,0 mm auf. Diese Werte können allerdings ohne Weiteres unter- oder überschritten werden.

Eine besonders detaillierte Qualitätskontrolle des herzustellenden Bauteils wird in einer weiteren Ausgestaltung der Erfindung dadurch erzielt, dass zur Bestimmung von Eigenspannungen des Bauteils während dessen Herstellung mindestens zwei Schmelzbäder in Bauteiloberflächen unterschiedlicher Bauteilabschnitte oder Bauteilschichten erzeugt und die jeweils auftretenden Oberflächenverzerrungen und/oder -dehnungen im Bereich um die jeweiligen Schmelzbäder optisch erfasst werden. Dadurch können auftretende Eigenspannungen in unterschiedlichen Ebenen des Bauteils beziehungsweise in unterschiedlichen Bauteilabschnitten oder -schichten ermittelt werden. Durch die Auswahl einer entsprechenden Anzahl von Schmelzbädern und entsprechenden Eigenspannungsmessungen beziehungsweise - berechnungen ergibt sich ein komplettes und gegebenenfalls vollständiges Abbild der Eigenspannungen während des gesamten Herstellungsprozesses des Bauteils. Hierdurch ist zum Beispiel die Einstellung günstiger Eigenspannungen im Bauteil während dessen Herstellung möglich. Zudem besteht wiederum die Möglichkeit der Validierung von Eigenspannungssimulationsrechnungen.

Das im Vorhergehenden beschriebene erfindungsgemäße Verfahren kann auch zur Herstellung eines Referenzbauteils oder eines Kalibrierkörpers verwendet werden. Dadurch können hinsichtlich der Eigenspannungen optimierte Herstellungsparameter ermittelt und vordefiniert werden. Anhand der Ergebnisse beziehungsweise eines Vergleichs mit den Eigenspannungen des Referenzbauteils oder des Kalibrierkörpers kann zudem eine Qualitätskontrolle der nach den vorgegebenen Parametern generativ erzeugten Bauteile erfolgen.

Ein weiterer Aspekt der Erfindung betrifft eine Vorrichtung zur Bestimmung von Eigenspannungen eines Bauteils während dessen Herstellung mittels eines generativen Fertigungsverfahrens, insbesondere eines Bauteils eines Flugtriebwerks. Dabei umfasst die erfindungsgemäße Vorrichtung eine generative Fertigungseinrichtung zum Herstellen des Bauteils, eine Vorrichtung zur Erzeugung von mindestens einem lokalen Schmelzbad in einer Bauteiloberfläche des herzustellenden Bauteils nach Fertigstellung eines vorbestimmten Bauteilabschnitts, eine optische Detektionseinrichtung, welche ausgebildet ist, Oberflächenverzerrungen und/oder - dehnungen der Bauteiloberfläche zumindest im Bereich um das erzeugte Schmelzbad zu erfassen und eine Recheneinrichtung, mittels welcher die vorliegenden Eigenspannungen des Bauteils zumindest im Bereich um das erzeugte Schmelzbad auf Grundlage der optisch erfassten Oberflächenverzerrungen und/oder -dehnungen ermittelt werden. Eine derartige Vorrichtung erlaubt eine zerstörungsfreie und exakte Eigenspannungsbestimmung am herzustellenden Bauteil. Es können beliebige Bauteilstrukturen dreidimensional untersucht werden. Weitere Vorteile bestehen in den kurzen Messzeiten, sowie der freien Wählbarkeit der Größe und Lage der Messstelle beziehungsweise des zu erzeugenden lokalen Schmelzbads. Zudem wird der generative Fertigungsprozess nicht beeinflusst, da nach Abschluss der Ermittlung der Eigenspannung das lokale Schmelzbad wieder erstarrt und der generative Aufbau des Bauteils unbeeinflusst fortgesetzt werden kann. Weitere sich ergebende Vorteile sind den vorhergehenden Beschreibungen zum ersten Erfindungsaspekt zu entnehmen. Die generative Fertigungseinrichtung umfasst bzw. ist eine Einrichtung zum selektiven Laserschmelzen und/oder zum selektiven Lasersintern mit mindestens einer Laserlichtquelle. Hierdurch können Bauteile mit beliebigen dreidimensionalen Geometrien hergestellt und im Hinblick auf die auftretenden Eigenspannungen und damit ihre Fertigungsqualität beurteilt werden, deren mechanischen Eigenschaften weitgehend denen des verwendeten Werkstoffs entsprechen. Geeignete Werkstoffe umfassen beispielsweise Metalle oder Metalllegierungen wie Stahl, Aluminium und Aluminiumlegierungen, Titan und Titanlegierungen, Kobalt- und/oder Chrom-Legierungen, Nickelbasislegierungen und Kupferlegierungen sowie keramische Werkstoffe und Kunststoffe. Die Detektionseinrichtung umfasst mindestens eine Kameraeinheit und mindestens eine Laserlichtquelle. Die Kameraeinheit kann sCMOS- und/oder CCD- und/oder CMOS-basierte Sensoren bzw. Kameras umfassen. Auch andere bildaufnehmende Vorrichtungen sind denkbar. Insbesondere bieten Kameras auf Basis von sCMOS-Sensoren verschiedene Vorteile, wie beispielsweise ein sehr niedriges Ausleserauschen, eine hohe Bildrate, einen großen Dynamikbereich, eine hohe Quanteneffizienz, eine hohe Auflösung sowie eine große Sensorfläche.

In einer vorteilhaften Ausgestaltung der erfindungsgemäßen Vorrichtung umfasst die generative Fertigungseinrichtung, die Vorrichtung zur Erzeugung von mindestens einem lokalen Schmelzbad und die Detektionseinrichtung mindestens eine gemeinsame Laserlichtquelle. Dadurch kann der apparative Aufwand der Vorrichtung vorteilhafterweise minimiert werden. Zudem ist es möglich, bereits vorhandene generative Fertigungseinrichtungen, die eine Laserlichtquelle nutzen, für die Bestimmung der Eigenspannung während der Herstellung des Bauteils ohne Weiteres zu nutzen beziehungsweise zu erweitern.

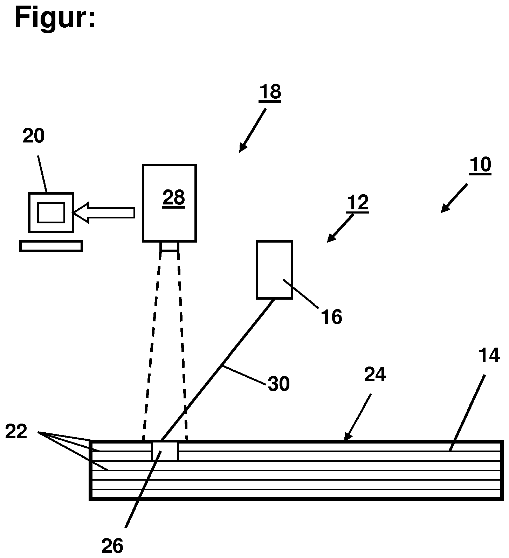

Dabei zeigt die Figur eine schematische Prinzipdarstellung der erfindungsgemäßen Vorrichtung 10. Die Vorrichtung 10 umfasst dabei eine generative Fertigungseinrichtung 12 zum Herstellen eines Bauteils 14. Bei der dargestellten generativen Fertigungseinrichtung 12 handelt es sich um eine Einrichtung zum selektiven Laserschmelzen, die eine Laserlichtquelle 16 aufweist.

Zum Herstellen des Bauteils 14 werden in an sich bekannter Weise dünne Pulverschichten einer hochtemperaturfesten Metalllegierung auf eine Plattform (nicht gezeigt) der Fertigungseinrichtung 12 aufgebracht, mit Hilfe des Lasers 16 bzw. des Laserstrahls 30 lokal aufgeschmolzen und durch Abkühlen verfestigt. Anschließend wird die Plattform abgesenkt, eine weitere Pulverschicht aufgebracht und erneut verfestigt. Dieser Zyklus wird solange wiederholt, bis das Bauteil 14 hergestellt ist. Das Bauteil 14 kann beispielsweise aus bis zu 2000 Bauteilschichten 22 bestehen bzw. eine Gesamtschichthöhe von 40 - 80 mm aufweisen. Das fertige Bauteil 14 kann anschließend weiterbearbeitet oder sofort verwendet werden.

Vor der endgültigen Fertigstellung des Bauteils 14 wird in einer Bauteiloberfläche 24 des herzustellenden Bauteils 14 nach Fertigstellung einer vorbestimmten Anzahl an generativ aufgebauten Bauteilschichten 22 durch den Laserstrahl 30 der Laserlichtquelle 16 ein lokales Schmelzbad 26 mit einer vorbestimmten Geometrie erzeugt. Über die optische Detektionseinrichtung 16, die insbesondere eine Kameraeinheit 28 umfasst, werden im Bereich um das erzeugte Schmelzbad 26 auftretende Oberflächenverzerrungen und/oder -dehnungen optisch erfasst. Hierzu wird dieser Bereich um das Schmelzbad 26 mittels der Laserlichtquelle 16 mit Laserlicht bestrahlt. Die Änderungen im so genannten Speckle-Muster, welches sich durch die Interferenz der einzelnen Laserstrahlen ergibt, können durch die Kameraeinheit 28 registriert werden. Das Speckle-Muster verändert sich beim Auftreten von Oberflächenverzerrungen und/oder -dehnungen im Bereich der bestrahlten Bauteiloberfläche. Auf Grundlage der optisch erfassten Oberflächenverzerrungen und/oder -dehnungen werden dann in einer Recheneinrichtung 20 die vorliegenden Eigenspannungen des Bauteils 14 im Bereich um das erzeugte Schmelzbad 26 berechnet.

## Patentansprüche

1. Verfahren zur Online-Analyse der Eigenspannungen bei der generativen Fertigung von Bauteilen, zur Prozesskontrolle, zur Verfahrensoptimierung und zur Kontrolle der Bauteilqualität über die Bestimmung der Eigenspannungen eines Bauteils (14) , insbesondere eines Bauteils eines Flugtriebwerks, während dessen Herstellung, folgende Schritte umfassend:
- Erzeugen von mindestens einem lokalen Schmelzbad (26) in einer Bauteiloberfläche (24) des herzustellenden Bauteils (14) nach Fertigstellung eines vorbestimmten Bauteilabschnitts, wobei das Bauteil (14) durch selektives Laserschmelzen und/oder durch selektives Lasersintern hergestellt wird und das lokale Schmelzbad (26) mittels Laserenergie erzeugt wird;
- Optische Erfassung von zumindest in einem Bereich um das erzeugte Schmelzbad (26) auftretenden Oberflächenverzerrungen und/oder - dehnungen mittels eines Speckle-Interferometrieverfahrens; und
- Ermittlung der zumindest im Bereich um das erzeugte Schmelzbad (26) vorliegenden Eigenspannungen des Bauteils (14) auf Grundlage der optisch erfassten Oberflächenverzerrungen und/oder -dehnungen.

2. Verfahren nach Anspruch 1,
**dadurch gekennzeichnet, dass**
zur Erzeugung des lokalen Schmelzbads (26) eine für das selektive Laserschmelzen und/oder das selektive Lasersintern verwendete Laserlichtquelle (16) verwendet wird.

3. Verfahren nach einem der vorhergehenden Ansprüche,
**dadurch gekennzeichnet, dass**
das lokal erzeugte Schmelzbad (26) eine vordefinierte Geometrie aufweist.

4. Verfahren nach einem der vorhergehenden Ansprüche,
**dadurch gekennzeichnet, dass**
das lokal erzeugte Schmelzbad (26) einen durchschnittlichen Durchmesser von 0,5 bis 3,0 mm und eine Tiefe von 0,1 bis 1,0 mm aufweist.

5. Verfahren nach einem der vorhergehenden Ansprüche,
**dadurch gekennzeichnet, dass**
für eine Belichtung wenigstens des Bereichs um das erzeugte Schmelzbad (26) zur Durchführung des Speckle-Interferometrieverfahrens, zur Erzeugung des lokalen Schmelzbads (26) und für das selektive Laserschmelzen und/oder das selektive Lasersintern eine gemeinsame Laserlichtquelle (16) verwendet wird.

6. Verfahren nach einem der vorhergehenden Ansprüche,
**dadurch gekennzeichnet, dass**
zur Bestimmung von Eigenspannungen des Bauteils (14) während dessen Herstellung mindestens zwei Schmelzbäder (26) in Bauteiloberflächen unterschiedlicher Bauteilabschnitte oder Bauteilschichten erzeugt und die jeweils auftretenden Oberflächenverzerrungen und/oder -dehnungen im Bereich um die jeweiligen Schmelzbäder (26) optisch erfasst werden, wodurch auftretende Eigenspannungen in unterschiedlichen Ebenen des Bauteils (14) ermittelt werden.

7. Verwendung eines Verfahrens nach einem der vorhergehenden Ansprüche zur präzisen Beurteilung der Fertigungsqualität eines Bauteils (14).

8. Vorrichtung (10) zur Durchführung eines V erfahrens nach einem der Ansprüche 1-8, umfassend:
- eine generative Fertigungseinrichtung (12) zum Herstellen des Bauteils (14) durch selektives Laserschmelzen und/oder durch selektives Lasersintern;
- eine Vorrichtung (16) zur Erzeugung von mindestens einem lokalen Schmelzbad (26) mittels Laserenergie in einer Bauteiloberfläche (24) des herzustellenden Bauteils (14) nach Fertigstellung eines vorbestimmten Bauteilabschnitts;
- eine optische Detektionseinrichtung (18), welche ausgebildet ist, Oberflächenverzerrungen und/oder-dehnungen der Bauteiloberfläche (24) zumindest im Bereich um das erzeugte Schmelzbad (26) zu erfassen, wobei die Detektionseinrichtung (18) mindestens eine Kameraeinheit (28) und mindestens eine Laserlichtquelle (16) umfasst; und
- eine Recheneinrichtung (20), mittels welcher die vorliegenden Eigenspannungen des Bauteils (14) zumindest im Bereich um das erzeugte Schmelzbad (26) auf Grundlage der optisch erfassten Oberflächenverzerrungen und/oder-dehnungen ermittelt werden.

9. Vorrichtung (10) nach Anspruch 8,
**dadurch gekennzeichnet, dass**
die generative Fertigungseinrichtung (12), die Vorrichtung (16) zur Erzeugung von mindestens einem lokalen Schmelzbad (26) und die Detektionseinrichtung (18) mindestens eine gemeinsame Laserlichtquelle (16) umfassen.

## Claims

1. A method for online analysis of the residual stresses during the generative manufacture of components, for process control, for method optimization and component quality control by determining the residual stresses of a component (14), in particular of a component of an aircraft engine, during production thereof, the method comprising the following steps:
- creating at least one local melt pool (26) in a surface (24) of the component (14) to be produced after completion of a predetermined portion of the component, wherein the component (14) is produced by selective laser melting and/or by selective laser sintering and the local melt pool (26) is created by means of laser energy;
- optically detecting surface distortions and/or elongations, which occur at least in a region around the created melt pool (26), by means of a speckle interferometry method; and
- determining the residual stresses of the component (14) which are present at least in the region around the created melt pool (26) on the basis of the optically detected surface distortions and/or elongations.

2. The method according to claim 1, **characterized in that** a laser light source (16) which is used for the selective laser melting and/or the selective laser sintering is used for creation of the local melt pool (26).

3. The method according to one of the preceding claims, **characterized in that** the locally created melt pool (26) has a predefined geometry.

4. The method according to one of the preceding claims, **characterized in that** the locally created melt pool (26) has an average diameter from 0.5 to 3.0 mm and a depth from 0.1 to 1.0 mm.

5. The method according to one of the preceding claims, **characterized in that** a common laser light source (16) is used for irradiation of at least the region around the created melt pool (26) in order to carry out the speckle interferometry method, for creation of the local melt pool (26), and for the selective laser melting and/or the selective laser sintering.

6. The method according to one of the preceding claims, **characterized in that**, in order to determine residual stresses of the component (14) during production thereof, at least two melt pools (26) are created in component surfaces of different component portions or component layers, and the respectively occurring surface distortions and/or elongations are optically detected in the regions around the respective melt pools (26), wherein residual stresses which occur are determined in different planes of the component (14).

7. A use of a method according to one of the preceding claims for precise assessment of the manufacturing quality of a component (14).

8. An apparatus (10) for carrying out a method according to one of claims 1 to 8, comprising:
- a generative manufacturing device (12) for producing the component (14) by selective laser melting and/or by selective laser sintering;
- a device (16) for creating at least one local melt pool (26) by means of laser energy in a surface (24) of the component (14) to be produced after completion of a predetermined portion of the component;
- an optical detection device (18) designed to detect surface distortions and/or elongations of the component surface (24) at least in the region around the created melt pool (26), wherein the detection device (18) comprises at least one camera unit (28) and at least one laser light source (16); and
- a computing device (20) by means of which the existing residual stresses of the component (14) are determined at least in the region around the created melt pool (26) on the basis of the optically detected surface distortions and/or elongations.

9. The apparatus (10) according to claim 8, **characterized in that** the generative manufacturing device (12), the device (16) for creating at least one local melt pool (26), and the detection device (18) comprise at least one common laser light source (16).

## Revendications

1. Procédé d'analyse en ligne des contraintes propres dans la fabrication générative de pièces, de contrôle de processus, d'optimisation de procédé et de contrôle de la qualité des pièces via la détermination des contraintes propres d'une pièce (14), en particulier d'une pièce d'un groupe motopropulseur, pendant sa fabrication, comprenant les étapes suivantes :
- la production d'au moins un bain de fusion local (26) dans une surface (24) de la pièce à fabriquer (14) après achèvement d'une section de pièce prédéterminée, dans lequel la pièce (14) est fabriquée par fusion sélective au laser et/ou par frittage sélectif au laser et le bain de fusion local (26) est produit au moyen d'énergie laser ;
- la saisie optique de distorsions et/ou d'expansions de surface apparaissant au moins dans une zone autour du bain de fusion produit (26) au moyen d'un procédé d'interférométrie à tavelures ; et
- la détermination des contraintes propres de la pièce (14) présentes au moins dans la zone autour du bain de fusion produit (26) sur la base des distorsions et/ou des expansions de surface optiquement saisies.

2. Procédé selon la revendication 1,
**caractérisé en ce que** :
l'on utilise, pour la production du bain de fusion local (26), une source de lumière laser (16) employée pour la fusion sélective au laser et/ou le frittage sélectif au laser.

3. Procédé selon l'une quelconque des revendications précédentes, **caractérisé en ce que** :
le bain de fusion produit localement (26) présente une géométrie prédéfinie.

4. Procédé selon l'une quelconque des revendications précédentes, **caractérisé en ce que** :
le bain de fusion produit localement (26) présente un diamètre moyen de 0,5 à 3,0 mm et une profondeur de 0,1 à 1,0 mm.

5. Procédé selon l'une quelconque des revendications précédentes, **caractérisé en ce que** :
l'on utilise, pour un éclairage au moins de la zone autour du bain de fusion produit (26) une source de lumière laser commune (16) pour la réalisation du procédé d'interférométrie à tavelures, pour la production du bain de fusion local (26) et pour ta fusion sélective au laser et/ou le frittage sélectif au laser.

6. Procédé selon l'une quelconque des revendications précédentes, **caractérisé en ce que :**
l'on produit, pour la détermination de contraintes propres de la pièce (14) au cours de sa fabrication, au moins deux bains de fusion (26) dans des surfaces de pièces de différentes sections de pièces ou de différentes couches de pièces et l'on saisit optiquement les distorsions et/ou expansions de surface apparaissant respectivement dans la zone autour des bains de fusion respectifs (26), en sorte de déterminer les contraintes propres apparaissant dans différents plans de la pièce (14).

7. Utilisation d'un procédé selon l'une quelconque des revendications précédentes pour l'évaluation précise de la qualité de fabrication d'une pièce (14).

8. Dispositif (10) pour la réalisation d'un procédé selon l'une quelconque des revendications 1 à 8, comprenant :
- un dispositif de fabrication génératif (12) pour la fabrication de la pièce (14) par fusion sélective au laser et/ou frittage sélectif au laser ;
- un dispositif (16) pour la production d'au moins un bain de fusion local (26) au moyen d'énergie laser dans une surface (24) de la pièce à fabriquer (14) après achèvement d'une section de pièce prédéterminée ;
- un dispositif de détection optique (18) qui est conçu pour saisir des distorsions et/ou des expansions de la surface de pièce (24) au moins dans la zone autour du bain de fusion produit (26), dans lequel le dispositif de détection (18) comprend au moins une unité de caméra (28) et au moins une source de lumière laser (16) ; et
- un dispositif informatique (20) à l'aide duquel les tensions propres présentes de la pièce (14) sont déterminées au moins dans la zone autour du bain de fusion produit (26) sur la base des distorsions et/ou des expansions de surface saisies optiquement.

9. Dispositif (10) selon la revendication 8,
**caractérisé en ce que** :
le dispositif de fabrication génératif (12), le dispositif (16) de production d'au moins un bain de fusion local (26) et le dispositif de détection (18) comprennent au moins une source de lumière laser commune (16).
